# EUROPEAN PATENT SPECIFICATION

(11) **EP 0 708 677 B1**
(45) Date of publication and mention of the grant of the patent: **15.03.2000**
(21) Application number: 94920483.8
(22) Date of filing: 07.07.1994
(51) Int. Cl.: B01D 46/02, B01D 46/04, B01D 46/24, B01D 29/66

(54) **AN APPARATUS FOR AND A METHOD OF FILTERING GASES**
VORRICHTUNG UND METHODE ZUM FILTRIEREN VON GASEN
APPAREIL ET METHODE DE FILTRAGE DE GAZ

(30) Priority: 12.07.1993 US 89814
(43) Date of publication of application: 01.05.1996
(73) Proprietor: Foster Wheeler Energia Oy, 00440 Helsinki (FI)
(72) Inventor: MARTIN, Gary, Upland, California 91784 (US); LEHTONEN, Pekka, FIN-48601 Karhula (FI)
(74) Representative: Görg, Klaus, Dipl.-Ing.
(86) International application number: PCT/FI94/00315
(87) International publication number: WO 95/02444

(56) References cited:
- DE-A- 1 407 945
- DE-A- 3 820 678

## Description

### BACKGROUND OF THE INVENTION

The present invention relates to an apparatus for filtering gases and a method of operating an apparatus for filtering gases. More specifically, the invention relates to an apparatus and a method for filtering gases containing solid contaminants and further to removing accumulated solids from filtering elements in a smooth and safe manner.

In various modern applications the efficiency of filtering devices is required to be extremely high, while the pressure drop over the filtering device must not exceed a certain predetermined level, and thus more and more effective cleaning systems are established. High temperature durability systems are also required for some applications. A Pressurized Fluidized Bed combustor connected to a gas compressor/turbine system can be considered such. In order to be able to use solid fuel, such as coal or peat, for generating pressurized hot flue gases to be expanded in a gas turbine, one must have appropriate means for preventing the particulate matter carry-over from combustion of such solid fuels. An efficient system for filtering the gases would permit the use of such fuels.

Removal of particulate matter from combustor exhaust gas effluent stream before leading the gas stream to a turbine can prolong the life of turbine blades and thus increase the reliability and efficiency of the whole process involved. Also, in some other cases, the governmental regulations regarding emissions permitted due to public health may contribute to the efforts to provide a system for filtering contaminated gases more efficiently.

In prior art, it is known to use various kinds of filters, such as bag house filters or ceramic filters for hot environment, in order to remove particulate from the gas stream. It is also essential to have the filter cleaned after a certain pre-determined operating period in order to maintain cleaning efficiency and pressure reduction of the gas over the filter in desired range. A commonly used method of cleaning the filter is using a reverse pulse of gas for flushing the filter. This kind of method is disclosed in, e.g., US-A-4,764,190. The filter elements are cleaned by use of a back-pulse manifold that directs a pulse of gas flow into the filter elements in a direction opposite to normal direction of gas flow to be filtered, thus dislodging the accumulated cake previously separated from the gas.

Also, EP-A-0 057 251 discloses a filter having a plurality of filter elements supported by a tube sheet, each filter element having open tops disposed in apertures of the tube sheet extending into lower chamber of the filter. There is also disclosed a system for backflushing the filter elements. The filter elements are cleaned by a pulse of high pressure gas from a gas delivering pipe, with help of a venturi the gas pulse pulls additional gas from the immediate vicinity and increases the total amount of the cleaning gas improving the cleaning effect. Further, it is stated that the system can include features which alleviate any undesirable interaction between the dirty gas entering the vessel and the downwardly flowing purged particles. According to the reference, the inlets for the gas to be cleaned are positioned high in the vessel, to promote a generally downwardly flow. EP 0 057 251 also discloses a baffle having perforations in upper section, the baffle being arranged to form an annular space between a wall of the vessel, and functioning as an equalizer of the inlet flow of the gas to be distributed evenly to the filter elements, thus the gas flow is arranged to be generally downwardly near the inner surface of the baffle. The baffle extends from the bottom of the vessel to the upper section thereof.

EP-B1-0 078 678 discusses, in more detail, the dislodging of particulates from filtering fabric by assistance of induced gas flow on the upstream side ( ie. outer side ) on the filter element. Gas is forced to circulate upwards along the outer surface of the filter fabric, thus maintaining the amount of particles in the gas stream. Although the method may be feasible to some extent but basically the suggested inducement of the gas surrounding the filter element causes more troubles by not allowing the dislodged particles to fall down.

The back-pulse flushing is commonly practised so that only one or a few filters are cleaned at same time while the others are in normal usage mode in order to ensure a proper running of the process while maintaining the pressure reduction within permitted range.

When activating the back pulse system for cleaning a filter during a cleaning mode, the gas pulse is introduced into the filter causing the cake of particulate material accumulated on the surface of the filter to dislodge and be entrained in the surrounding gas space by the force of the back pulse. However, since there are filters in normal usage, i.e. sucking gas from the plenum into and through the filter, in vicinity of the pulsed filter, the dislodged particulate is strongly entrained by those gases and thus easily carried into another filter. Thus the efficiency of the whole filtering device is deteriorated as a result of the above mentioned phenomenon. The problem causes a number of difficulties, e.g. the sequence of flushing the filters must be multiplied, causing the decreasing of efficient filtering area available for filtering, the density of particulate in the gas is generally increased in filtering plenum, causing unnecessary abrasion of surfaces, which can also lead to problems eg. if cooled constructions are used in the filter.

An apparatus and a method according to the preambles of claims 1 and 12 are known from DE-A-1 407 945.

### SUMMARY OF THE INVENTION

It is an object of the present invention to provide a filtering apparatus capable of effecting filtering gases. It is a further object of the present invention to provide a method of and an apparatus for filtering gases in high temperature and high pressure circumstances.

This object is solved according to the present invention by an apparatus according to claim 1 and a method according to claim 12. Preferred embodiments are defined in the present claims. The present invention solves the above discussed problems, related to commonly used practise of flushing the filter elements used for cleaning contaminated gases, with a novel and surprisingly efficient manner. In particular, a shroud means is provided which surrounds a filtering means for preventing the re-entrainment of the solids removed from the filtering means, isolating the cloud of back flushed solids and enhancing the migration of solids to a region where the solids are not influenced by flow of the gases.

According to the present invention it as possible to provide a filtering device for sustained running periods combined with efficient cleaning facilities by utilizing the method of the present invention. Since the basic construction of the filter may be designed according to the needs of the process involved, eg. when connected to a Pressurized Fluidized Bed Combustor/Gasifier the filter may be constructed of pressure/temperature proof materials and formed into shape of most optimum performance, a more efficient filtering process may be gained according to the present invention without loss of performance. And, since the preferred embodiment of the present invention utilizes plenums in the vessel for treating the gas, the maintenance and utilization of filtering means is most conveniently performed.

According to one preferred embodiment of the invention the filtering system is resistant for high temperature and high pressure circumstances, being operatively connectable to a Pressurized Fluidized Bed reactor, such as Pressurized Fluidized Bed combustor of gasifier, for receiving and processing the gases resulting from the reactions taking place in such a reactor. Due to eg. the reliable performance of long running applications the filtering system of the present invention is most applicable to above mentioned systems or the like. The gases originating from such a reactor are usually in a pressure of 2 to 40 bar and at a temperature of 500 to 1200°C in which circumstances the filtering system of the present invention results in problem-free running facilities. According to a preferred embodiment of the invention, the filtering system is preferably formed of a plurality of clusters of filter elements, each cluster formed of a plurality of filter elements, preferably of ceramic material. The filtering system comprises an assembly for supplying a reverse-flushing gas pulse into each cluster of filter elements, preferably separately, in order to clean the filter elements by dislodging the accumulated solids. The cluster of filter elements is provided with a shroud means surrounding the cluster, said cluster being preferably arranged in a vessel extending substantially vertically from a substantially horizontal supporting sheet. The shroud means for preventing the re-entrainment of the solids removed from the filter elements is preferably a substantially vertical tubular member arranged to enclose the cluster of filters for collecting the solids flushed from the filter during the back-pulse operation and for conveying the solids towards the lower section. In order to maintain the gas velocity within the permitted range the gap between the shroud and the filter elements is designed to provide a desired gas velocity. Further, it is advantageous to arrange the cluster of filter elements so that said cluster comprises a duct supported from a supporting plate, the supported duct can also function as a fluid communication path for gases, and a plurality of filter elements are attached to said duct preferably in a manner which provides a space, eg. an annular space, between the shroud and the supporting duct being favourable for downward movement of the flushed solids. This is preferably accomplished by adapting the filter elements to the duct so that they are substantially enclosed by said duct so that the filter elements are attached to the duct in the vicinity of the area of said filter element receiving the gas to be purified. Thus the falling solids are allowed to slide smoothly along the surfaces of the shroud and the duct instead of accumulating on the surfaces of the filter elements.

The shroud may be made of several materials, depending on the requirements of the environment, eg. when filtering gases of high temperature, say 1200°, a high temperature durable material such as metal for high temperatures or a ceramic material is required.

It may be advantageous in some applications, eg. when the wall of the shroud is solid, to have the diameter of the tubular shroud changing in order to equalize the gas velocity in the space between the filter and the shroud, one alternative is to form the shroud in conical shape, so that the diameter increases from the value at the midpoint towards the upper and lower ends of the shroud, this is the case when the gases are entered to the space between the shroud means and the filter through both ends, which, in fact, is a preferred solution due to eg. even distribution of the gases over the filter area. Alternatively, the shroud may be provided with openings, formed so that the downwardly flowing flushed material is not allowed to exit the shroud.

Since the solids are easily entrained by the gases, it is preferred to have at least one of the shroud means to extend farther on its lower end than the others. That particular feature ensures that the upper level of a cloud of solids in a lower section of the first plenum of the filtering means is low enough not to be influenced by the gas flow to the filters during normal operation. So, it is ensured that the filters can not receive the solids already once filtered from the gases and removed from the filter.

According to still another preferred embodiment of the present invention the filter elements are arranged to a substantially vertical wall preferably arranged side by side into a plurality of vertical rows. In this embodiment the backflushing may be arranged so as to be provided to each vertical row at a time, and thus the shroud means is adapted to each of said rows corresponding to the backflushing arrangement. The shroud means is preferably formed of a member, adapted to a proximity of the area of the filter element used for filtration, having an impingement portion for receiving the solids flushed from the filter element, and a material collecting portion for collecting the solids and conveying the solids to the lower section of the vessel. The width of said shroud means preferably substantially equals to or is greater than the width of the effective frontal area of the filter element in order to be able to collect the stream of solids flushed from the filter elements. The material collecting portion extends from the horizontal edges of the impingement portion, said collecting portion being preferably bent towards the filter element and provided with a bayment arrangement at the edge of said material collecting portion for preventing the solids from being entrained by the gas.

The present invention is also applicable for a filter utilizing tubular filter elements instead of clusters of filter elements, since effective results are obtained in connection with tubular filters, too. In such an application each tubular filter element may be provided with a shroud means of its own, or two or more filters utilize the same shroud means; however, if too many filters are using the same shroud means, the effect will decrease. The tubular filter element may be a ceramic candle filter, or a conventional bag filter.

### DESCRIPTION OF THE DRAWINGS

In the drawings:
FIG. 1 is a sectional side view of the filtering apparatus using clusters of ceramic filter elements according to one preferred embodiment of the invention.
FIG. 2 is a sectional plan view of the filtering apparatus using clusters of ceramic filter elements according to one preferred embodiment of the invention.
FIG. 3 is a sectional plan view of the filtering apparatus according to another preferred embodiment of the invention.
FIG. 4 is a sectional plan view of the filtering apparatus according to still another preferred embodiment of the invention.
FIG. 5 is a sectional plan view of the filtering apparatus according to still another preferred embodiment of the invention.
FIG. 6 is a view of the a cross section of the shroud means according to the preferred embodiment of the present invention.
FIG. 7 is a view of the a cross section of the shroud means according to another preferred embodiment of the present invention.
FIG. 8 is a top view of the filtering apparatus using clusters of ceramic filter elements adapted to a substantially vertical wall according to still another preferred embodiment of the invention.
FIGS. 9 and 10 are perspective views of shrouds having conical or hourglass configurations.
FIG. 11 is a side schematic view, with the near wall removed for clarity of illustration, of another embodiment of filtering apparatus according to the invention with a plurality of vertically spaced clusters of filter candles separated by shroud walls having a zig-zag configuration.
FIG. 12 is a schematic cross-sectional view of the apparatus of FIG. 11 taken along lines 12-12 thereof.
FIGS. 13 and 14 are detail views like that of FIG. 11 showing other arrangements of filter candles and shrouds according to still another aspects of the present invention.

### DETAILED DESCRIPTION OF THE PRESENT INVENTION

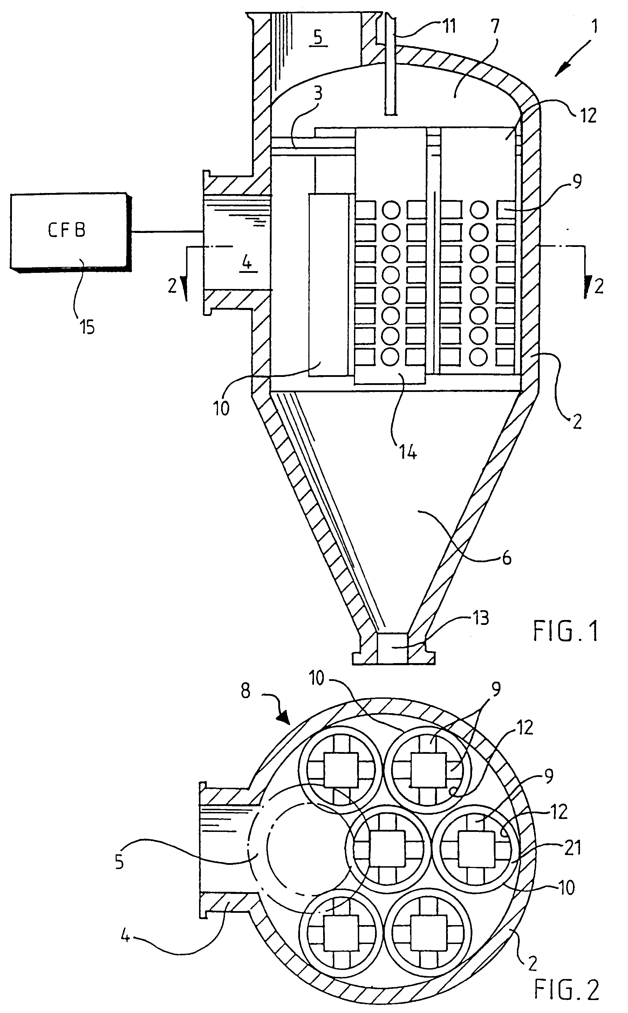

Referring to FIG. 1, a filtering apparatus 1 according to a preferred embodiment of the present invention comprises a vessel 2 of preferably generally circular cross section having a support plate 3 dividing the vessel into two compartments: a first 6 and a second 7 plenum. An inlet 4 for gases to be purified and an outlet 13 for separated solids are adapted to be in connection to said first plenum and an outlet 5 is connected to be in connection to said second plenum 7 for discharging the gases.

An assembly 11 for introducing a pulse of cleaning gas into each of clusters of filter elements is also provided, said clusters of filters 8 being supported by the supporting plate 3. The clusters are attached to the supporting plate preferably on their upper portion. Each cluster of filter elements 8 comprises a duct 12 preferably forming a flow path for gases from filter elements, attached to said duct, to the second plenum 7. The filter elements 9 are attached to the duct preferably on a gas receiving end of the filter element. By the expression "gas receiving end" is meant that end of the filter element in which front area receiving the gases containing contaminants is located. So, the filter element is actually attached substantially inside the duct. By that measure, since the outside surface of said duct is created as smooth as possible, an easy sliding of solids flushed from the elements is thus ensured, and the advantageous performance is obtained.

Since the surface of the filter element is considerably rough, the upper surface of each element especially can accumulate solids on them if the filter elements were not attached according to the present invention. As illustrated in FIG. 1 the supporting duct 12 is a tubular member, but if more gas space is required between the duct 12 and the shroud 10, the duct, being generally of smaller diameter, may be provided with local extension parts for every filter element, which are preferably to be fixed so that the elements are to be attached to the duct extension preferably on a gas receiving end of the filter element, thus maintaining a smoother outer surface.

At least one of the shroud means 10 can extend farther towards the lower section of the first plenum as indicated by reference 14 in order to ensure that the upper level of a cloud of solids in the lower section of the first plenum of the filtering means is low enough not be influenced by the gas flow to the filters during the normal operation. Thus the overall filtering operation is more efficient.

As seen schematically at reference numeral 15 in Fig. 1, the inlet 4 may be connected to a circulating bed reactor, or a like source of high temperature, high pressure gas with entrained particles. Typically, the pressure of the gases discharged from the CFB reactor 15 and fed to the inlet 4 to vessel 2 is between about 2-40 bar, and the temperature is between 500-1200°C In this case, it is necessary for the filters 9 to be of ceramic or other high temperature resistant material, such as shown in U.S. patents 4,764,190, 4,793,292, 4,869,207, e.g. ceramic tube filters or monolithic ceramic filters in a generally tubular or parallepiped configuration.

The gases to be filtered are introduced to the first plenum 6 via an inlet 4. Being conveyed to the space between the duct 12 and the shroud 10 preferably through both ends of the shrouds 10, and further to the filter elements the gases are fed through said elements to the interior space of the duct in order to separate the particulate material from said gases. Thus, cleaned gases are further conveyed to the second plenum and discharged from there via outlet 5 for further processing. When the assembly for supplying a flushing pulse of gas 11 is activated, a pulse of gas is introduced at least into one duct. Due to the reverse flow of gas through the elements the accumulated solids are dislodged from the filter. The dislodged solids impact the shroud, thus ensuring that the solids do not get influenced by the gas flowing to other filter clusters, and are conveyed to the lower section of the vessel to be removed via outlet 13.

In FIG. 2 a filtering apparatus according to a preferred embodiment is shown as top view illustrating the assembly of the clusters 8 of filters in the vessel 2. The elements 9 are attached to the duct 12 from their gas receiving end, in this case totally inside the duct. The shroud 10 is adapted to form an annulus 21 between the duct and the shroud.

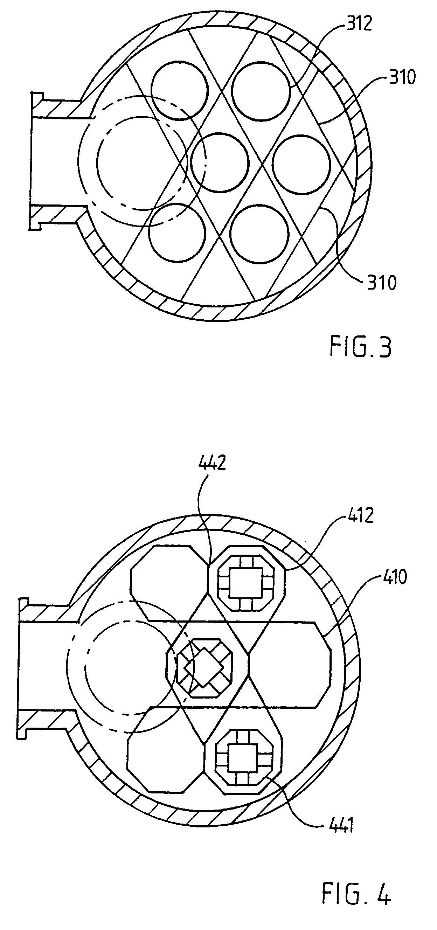

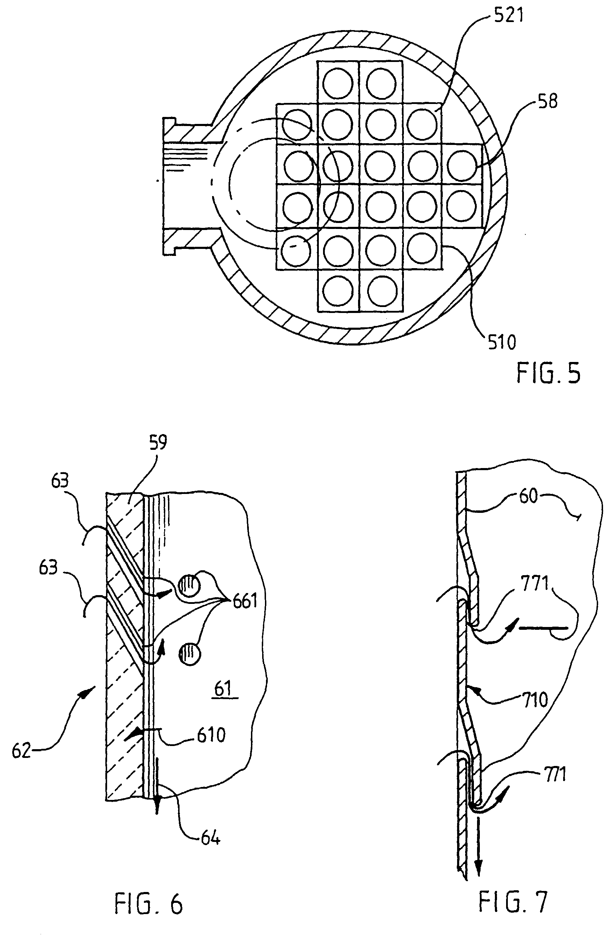

The shroud may be formed also of non-circular elements, as shown in FIGS. 3 and 4. The shroud may be formed to a shape of polygon 410 thus enabling the usage of common walls 442 of two parallel shrouds. The duct 441 may be formed to a shape of a polygon 412, as well, but tubular form is preferred. In some cases a form of a honeycomb or equivalent, in shroud construction 310 may be advantageous. A filter assembly 312 may be similar to the embodiment of FIG 1, but also a fabric bag filter may be applied as more clearly illustrated in FIG 5. The shroud 510 is formed of a plurality of adjacent square channels defining the space 521 between each filter 58 and the wall of the shroud. The filter 58 in this embodiment is preferably a ceramic candle tube, but may also be a fabric bag filter if qualities of a ceramic structure are not required for some reasons.

Referring now to FIGS. 6 and 7, construction of a wall of the shroud 610 and 710 respectively is illustrated. It may comprise openings 661 and 771. In a case of the FIG 6 the wall is made of a refractory material such as ceramic material and openings 661 are provided to enhance the distribution of the gas, however the openings are preferably directed so that the inner end of the opening is lower than the outer end. Thus the falling solids do not enter outside through the openings but slide towards the lower section of the vessel. The openings may be circular opening or slots, as well. In FIG. 7 another embodiment of the opening is illustrated where the openings 771 are made by providing two bendings in sequence to the shroud wall.

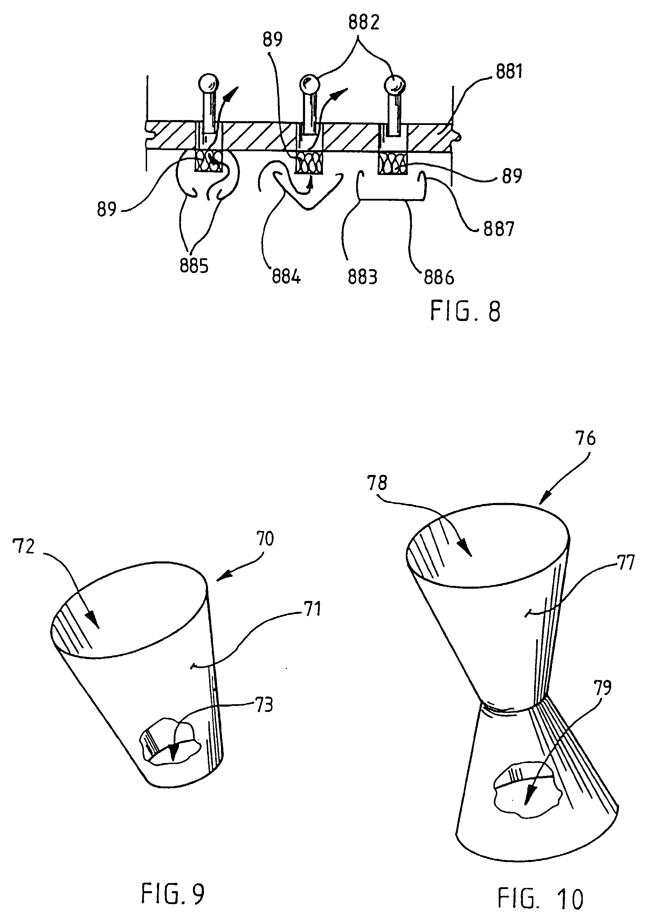

FIG. 8 discloses still another embodiment of the present invention. The filter elements 89 are attached to a substantially vertical wall 881 which may be cooled or non-cooled, in parallel, vertical rows, each row being provided with a backflushing assembly 882. The pattern of mounting the filter elements and the shroud means may, of course, vary according to the needs of a specific situation as long as the purpose of the shroud means is fulfilled. The shroud means 883, 884 and 885 are disposed adjacent the area of each filter discharging the solids during the cleaning mode operation. Shrouds 883 and 884 show two different solutions for filters having their gas receiving area at the end wall of said filter, but shrouds 885 may also be positioned at the sides of the filter element in case the gas receiving areas of the filter are at its side walls. The shroud is formed of an impingement portion 886 for receiving the solids flushed from the filter element, and a material collecting portion 887 for collecting the solids and conveying the solids to the lower section of the vessel. The material collecting portion extends from the vertical edges of the impingement portion, said collecting portion is preferably bent towards the filter element and is provided with a bayment arrangement at the edge of said material collecting portion for preventing the solids to be entrained in the gas.

FIGS. 9 and 10 show two other possible configurations of shrouds that may be utilized according to the invention (e.g. in place of shroud 10 in FIGS. 1 and 2). The shroud 70 in FIG. 9 comprises a generally conical (truncated cone) wall 71 with open top 72 and open bottom 73, normally gas passing through open top 72 into the filters (not shown) within shroud 70, and particles discharged through 73. The shroud 76 in Fig. 10 has an hourglass-simulating shaped wall 77, with an open top 78 and open bottom 79 into both of which gas to be filtered flows, with particles passing through bottom 79 when dislodged from filters (not shown) within shroud 76.

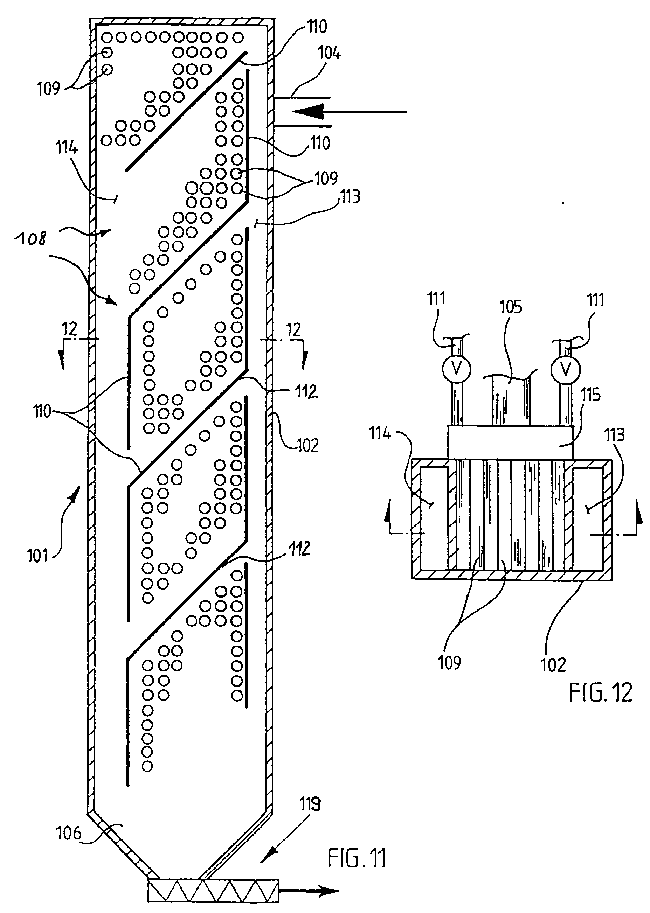

The apparatus of FIGS. 11 and 12 illustrates an embodiment having a different configuration of shrouds and filters than those illustrated earlier. The filtering apparatus 101 includes a generally vertical vessel 102 with a dirty gas inlet adjacent the top at one side communicating with the interior volume (including portion/plenum 113) of the vessel 102 surrounding the conventional ceramic filter candles 109 disposed horizontally therein in vertically spaced clusters 108. The gas passes through the filter candles 109 into the clean gas ducts/headers/plenums 115 (see FIG. 12) associated with one or more clusters 108, passing out the clean gas outlet 105 common to all of the ducts 115. A reverse pulse of cleaning gas is added by means 111 (see FIG. 12), periodically, intermittently, in response to a pressure build-up indicating clogging to dislodge filtered-out particles that have collected on the outer surfaces of the filters 109.

In FIGS. 11 and 12, the shrouds 110 are illustrated in the form of walls (e.g. high temperature resistant metal, or ceramic, or metal covered with ceramic), except for the uppermost and lowermost shrouds 110, the walls having a generally zig-zag configuration. The portion of each shroud 110 below a cluster 108 - e.g. walls 112 in FIG. 11, - is slanted with respect to the horizontal, downwardly toward the ash collector duct 114, to direct the flow of solids dislodged from the cluster 108 of the filters 109 immediately thereabove toward the bottom 106 of the vessel 102, to ultimately be discharged through the filtered-out particles outlet 119.

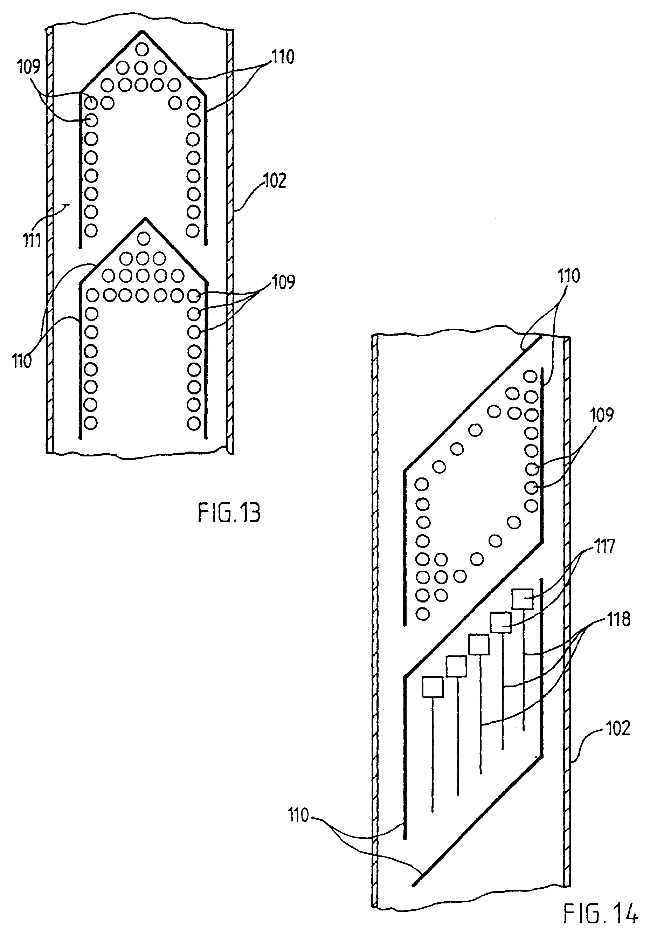

FIGS. 13 and 14 show configurations like those in FIGS. 11 and 12, only having slightly different arrangements of the filters 109 and/or shrouds 110.

In FIG. 13, the horizontally disposed filters 109 in each cluster 108 are disposed in an arrow tip configuration, and thus the shrouds 110 covering them also have such a configuration, the walls 112 serving to cause dislodged filtered-out solids from the next-above cluster 108 to flow downwardly toward the particles outlet 113.

In FIG. 14, the shrouds 110 are configured as illustrated in FIG. 11, however some of the filters have a different configuration. For the lower cluster 108 in FIG. 11, the ceramic filter candles 118 are disposed vertically, connected at the tops thereof to ducts 117, which in turn are connected to header 115, and ultimately to clean gas outlet 105.

Using the apparatus described above, a method of filtering particles from gas (e.g. a high temperature and pressure gas from the pressurized CFB 15) is provided. The method comprises the steps of: a) Introducing gas with entrained particles to be filtered into the vessel 2, 102 into operative association with the filters 9, 109, 118, etc. to filter particles from the gas and discharging cleaned gas from the vessel (through outlet 5, 105). b) At predetermined intervals (e.g. intermittently, periodically, in response to a back pressure indicating clogging, etc.), directing a pulse of cleaning gas toward at least some of the plurality of filters to dislodge filtered particles which have collected thereon. c) Preventing the particles dislodged from the filters 9, 109 etc. from being entrained in gas passing into association with other filters (in other clusters 8, 108). And, d), directing the dislodged particles so that they pass toward the particles discharge outlet 13, 113. Step c) is preferably practised by providing shrouds surrounding those portions of the filters 9, 58, 89 from which the particles will be dislodged, such as the shrouds 10,110, 310, 410, 510, 610, 710, 70, 76, or 883-887. Discharge of the particles from the vessel (2, through discharge 13) may be facilitated by mounting the clusters 8 etc. in ducts 12, 312, 412 etc. so that the outer surfaces of the ducts (surrounded by the shrouds 10 etc.) are substantially smooth so that particles will readily flow down them toward the particles discharge (13).

Thus it will be seen that according to the present invention a method and an apparatus are provided which provide enhanced filtering efficiency by substantially avoiding having to separate a particle from the gas to be filtered more than once.

It is not intended to restrict the scope of the invention with the above detailed illustrations but all variations equivalent and obvious to a person skilled in the art are to be included within the scope of the protection described in the following claims.

## Claims

1. An apparatus for filtering gases, consisting essentially of
- a vessel consisting of walls defining said vessel, said vessel having a top and a bottom and at least a first plenum for gases containing contaminants to be removed from the gases and at least a second plenum,
- at least one inlet for introducing dirty gases into the first plenum,
- at least one outlet for filtered gases in the second plenum,
- at least one outlet for entrained solids separated from gases in the first plenum, arranged in the bottom of the vessel,
- at least one filtering means arranged in the vessel forming a flow path for gases from the first plenum to the second plenum, which filtering means comprise at least one element substantially permeable to gases and substantially impermeable to the entrained solids, through which element the gases are arranged to flow to the second plenum,
- means for supplying a reverse-flushing gas pulse into the filtering means for removing solids separated from the gases flowing through the filtering means and accumulated thereon, and
- one or more filtering means each being surrounded by a shroud means, said shroud means having a top and an open bottom,
**characterized in that**
- the at least one inlet for introducing dirty gases into the first plenum is arranged adjacent the top of the vessel, and that
- the shroud means has an open top or openings in its upper end to allow dirty gas to pass through the open top or openings into the space between the shroud means and the filtering means, and is arranged to direct solids removed from the filtering means away from the dirty gas inlet towards the solids outlet so as to resist re-entrainment of the solids in the dirty gas.

2. An apparatus according to claim 1, wherein the shroud means is arranged so that vertical portions of the filtering element are totally surrounded by the shroud means.

3. An apparatus according to claim 2, wherein the shroud means is arranged to be attached to another shroud means at its outer surface.

4. An apparatus according to claim 2, wherein the shroud means is formed of a plurality of substantially parallel passageways enclosing the filtering means, each passageway having at least one common wall with another passageway.

5. An apparatus according to claim 4, wherein the passage ways are arranged to be in a form of a honeycomb structure.

6. An apparatus according to claim 1, wherein the shroud means is a member arranged in the proximity of the area of the filter element used for filtration, having an impingement portion for receiving the solids flushed from the filter element, and a material collecting portion for collecting the solids and conveying the solids to the bottom of the vessel.

7. An apparatus according to claim 6, wherein the impingement portion has a width substantially equal or greater to the width of the effective front area of the filter element and the material collecting portion (887) extending from vertical edges of the impingement portion (886), said collection portion (887) being bent towards the filter element and having a bayment at the rearmost edges of said material collection portion (887) to prevent the solids being re-entrained in the gas.

8. An apparatus according to claim 1, wherein said shroud means comprises a wall provided with openings.

9. An apparatus according to claim 1, wherein said shroud means is of high temperature durable metal or a ceramic material.

10. An apparatus according to claim 1 comprising at least two filtering means and surrounding shroud means, wherein at least one of said shroud means extends farther towards a lower section of the vessel compared to the other shroud means.

11. An apparatus according to claim 1, wherein the shroud means is a tubular member having an inner diameter greater than one required to circumscribe the filtering means.

12. A method of operating a filtering device , the filtering device essentially comprising:
- a vessel having a top and a bottom, at least a first plenum for gases containing contaminants to be removed from the gases and at least a second plenum,
- at least one inlet for introducing dirty gases into the first plenum,
- at least one outlet for filtered gases in the second plenum,
- at least one outlet for entrained solids separated from gases in the first plenum and arranged in the bottom of the vessel,
- at least one filtering means arranged in the vessel and forming a flow path for gases from the first plenum to the second plenum, which filtering means comprises at least one element substantially permeable to gases and substantially impermeable to solids, through which element the gases are arranged to flow to the second plenum,
- means for supplying a reverse gas pulse into the filtering means for removing solids separated from the gases flowing through the filtering means and accumulated thereon, one or more filtering means being each surrounded by a shroud means, said shroud means having a top and an open bottom, wherein the method comprises the steps of:
- introducing the gases containing contaminants to be removed from the gases via the inlet into a first plenum of said vessel;
- arranging said gases to flow through said filtering means, thus performing a filtering of said gases by separating and accumulating at least a portion of the entrained solids from the gases on said filtering means;
- discharging the filtered gases via the outlet for further processing; and
- supplying a flushing reverse gas pulse into the at least one filtering means for removing the accumulated solids separated from the gases flowing through the filtering means;
**characterized by** introducing the gases into the first plenum through the inlet arranged adjacent the top of the vessel, allowing dirty gas to pass into the space between the shroud means and the filtering means through an open top or openings in the upper end of the shroud means, and directing the removed solids by said shroud means away from the dirty gas inlet towards the solids outlet so as to resist re-entrainment in the dirty gas of the removed solids.

## Patentansprüche

1. Vorrichtung zur Filterung von Gasen, bestehend im wesentlichen aus
- einem Gefäß, bestehend aus das Gefäß bildenden Wänden, welches Gefäß einen Oberteil und einen Unterteil und zumindest einen ersten Sammelraum für aus den Gasen zu entfernende Verunreinigungen enthaltende Gase und zumindest einen zweiten Sammelraum umfaßt,
- zumindest einem Einlaß zur Einführung von Schmutzgasen in den ersten Sammelraum,
- zumindest einem Auslaß für gefilterte Gase im zweiten Sammelraum,
- zumindest einem Auslaß für mitgeführten, im ersten Sammelraum aus den Gasen abgeschieden Feststoff im Unterteil des Gefäßes,
- zumindest einem im Gefäß angeordneten Filtermittel, das einen Strömungspfad für Gase vom ersten Sammelraum zum zweiten Sammelraum bildet, welches Filtermittel zumindest ein für Gase wesentlich durchlässiges und für den mitgeführten Feststoff wesentlich undurchlässiges Element umfaßt, wobei die Gase veranlaßt werden, durch das Element zum zweiten Sammelraum zu fließen,
- Mitteln zur Beaufschlagung des Filtermittels mit einem Gas-Rückspülimpuls, um den, aus den durch das Filtermittel fließenden Gasen abgeschiedenen und darauf angesammelten Feststoff zu entfernen, und
- einem oder mehreren, jeweils von einer Hülle umschlossenen Filtermitteln, welche Hülle einen Oberteil und einen offenen Unterteil hat,
dadurch **gekennzeichnet**, daß
- der zumindest eine Einlaß zur Einführung von Schmutzgasen in den ersten Sammelraum nahe dem Oberteil des Gefäßes angeordnet ist, und daß
- die Hülle einen offenen Oberteil oder Öffnungen an ihrem oberen Ende hat, damit Schmutzgas durch den offenen Oberteil oder die Öffnungen in den Raum zwischen Hülle und Filtermittel fließen kann, und auf solche Weise angeordnet ist, daß sie vom Filtermittel entfernten Feststoff weg vom Schmutzgaseinlaß zum Feststoffauslaß hinleitet, um einer erneuten Mitführung von Feststoff im Schmutzgas entgegenzuwirken.

2. Vorrichtung nach Anspruch 1, dadurch **gekennzeichnet**, daß die Hülle auf solche Weise angeordnet ist, daß vertikale Abschnitte des Filterelements vollständig von der Hülle umgeben sind.

3. Vorrichtung nach Anspruch 2, dadurch **gekennzeichnet**, daß die Hülle auf solche Weise angeordnet ist, daß sie an ihrer Außenfläche an anderen Hüllen befestigt ist.

4. Vorrichtung nach Anspruch 2, dadurch **gekennzeichnet**, daß die Hülle aus einer Vielzahl wesentlich paralleler, die Filtermittel umschließender Durchgänge besteht, wobei jeder Durchgang zumindest eine gemeinsame Wand mit einem anderen Durchgang hat.

5. Vorrichtung nach Anspruch 4, dadurch **gekennzeichnet**, daß die Durchgänge derart angeordnet sind, daß sie in einer Wabenkonstruktion vorliegen.

6. Vorrichtung nach Anspruch 1, dadurch **gekennzeichnet**, daß die Hülle ein Organ ist, das nahe der zur Filterung benutzten Fläche des Filterelements angeordnet ist und einen Aufprallbereich zur Aufnahme des vom Filterelement rückgespülten Feststoffs und einen Materialsammelbereich zum Einsammeln des Feststoffs und Beförderung des Feststoffs in den unteren Teil des Gefäßes aufweist.

7. Vorrichtung nach Anspruch 6, dadurch **gekennzeichnet**, daß der Aufprallbereich eine Breite hat, die im wesentlichen gleich oder größer als die Breite der effektiven Frontfläche des Filterelementes ist, und daß sich der Materialsammelbereich (887) von den senkrechten Kanten des Aufprallbereichs (886) erstreckt, welcher Sammelabschnitt (887) zum Filterelement hingebogen ist und einen toten Winkel an den hintersten Rändern des Materialsammelbereichs (887) hat, um der erneuten Mitführung von Feststoff im Gas entgegenzuwirken.

8. Vorrichtung nach Anspruch 1, dadurch **gekennzeichnet**, daß die Hülle eine mit Öffnungen versehene Wand umfaßt.

9. Vorrichtung nach Anspruch 1, dadurch **gekennzeichnet**, daß die Hülle aus warmfestem Metall oder einem keramischen Material ist.

10. Vorrichtung nach Anspruch 1, die zumindest zwei Filtermittel und sie umgebende Hüllen umfaßt, dadurch **gekennzeichnet**, daß zumindest eine der Hüllen sich weiter zu einem unteren Abschnitt des Behälters im Vergleich zu den anderen Hüllen erstreckt.

11. Vorrichtung nach Anspruch 1, dadurch **gekennzeichnet**, daß die Hülle ein rohrförmiges Organ ist, das einen lichten Durchmesser hat, der größer ist als was zum Umschließen des Filtermittels notwendig ist.

12. Verfahren zum Betreiben einer Filtervorrichtung, welche Filtervorrichtung im wesentlichen folgendes umfaßt:
- ein Gefäß mit einem Oberteil und einem Unterteil, zumindest einem ersten Sammelraum für aus den Gasen zu entfernende Verunreinigungen enthaltende Gase und zumindest einem zweiten Sammelraum,
- zumindest einen Einlaß zur Einführung von Schmutzgasen in den ersten Sammelraum,
- zumindest einen Auslaß für gefilterte Gase im zweiten Sammelraum,
- zumindest einen Auslaß für mitgeführten, im ersten Sammelraum aus den Gasen abgeschiedenen Feststoff, der im unteren Teil des Gefäßes angeordnet ist,
- zumindest ein Filtermittel, das im Gefäß angeordnet ist und einen Strömungspfad für Gase vom ersten Sammelraum zum zweiten Sammelraum bildet, welches Filtermittel zumindest ein für Gase wesentlich durchlässiges und Feststoff wesentlich undurchlässiges Element umfaßt, wobei die Gase veranlaßt werden, durch das Element zum zweiten Sammelraum zu fließen,
- Mittel zur Beaufschlagung des Filtermittels mit einem Gas-Gegenstromimpuls, um den, aus den durch das Filtermittel fließenden Gasen abgeschiedenen und darauf angesammelten Feststoff zu entfernen, wobei jeweils eines oder mehrere Filtermittel von Hüllen umschlossen sind, welche Hüllen einen Oberteil und einen offenen Unterteil haben, wobei das Verfahren folgende Schritte umfaßt:
- Einführung der aus den Gasen zu entfernende Verunreinigungen enthaltenden Gase über den Einlaß in einen ersten Sammelraum des Gefäßes;
- Veranlassen der Gase, durch das Filtermittel zu fließen, wodurch eine Filterung der Gase stattfindet, indem zumindest ein Teil des mitgeführten Feststoffs aus den Gasen ausscheidet und sich auf den Filtermitteln ansammelt;
- Ableiten der gefilterten Gase über den Auslaß zur weiteren Aufbereitung; und
- Beaufschlagen des zumindest einen Filtermittels mit einem Gas-Rückspülimpuls zur Entfernung des angesammelten, aus dem das Filtermittel durchfließenden Gas abgeschiedenen Feststoffs;
**gekennzeichnet** durch Einführung der Gase in den ersten Sammelraum durch den nahe dem Oberteil des Gefäßes angeordneten Einlaß, wodurch Schmutzgas in den Raum zwischen Hülle und Filtermittel durch einen offenen Oberteil oder durch Öffnungen am oberen Ende der Hülle fließen kann, und Leitung des entfernten Feststoffs durch die Hülle weg vom Schmutzgaseinlaß zum Feststoffauslaß hin, um einer erneuten Mitführung des entfernten Feststoffs im Schmutzgas entgegenzuwirken.

## Revendications

1. Appareil pour filtrer des gaz, se composant essentiellement:
- d'un récipient composé de parois définissant ledit récipient, ledit récipient ayant un haut et un fond et au moins un premier plénum pour des gaz contenant des contaminants à éliminer des gaz et au moins un deuxième plénum;
- d'au moins une entrée pour introduire les gaz impurs dans le premier plénum;
- d'au moins une sortie pour les gaz filtrés dans le deuxième plénum;
- d'au moins une sortie pour les solides entraînés séparés des gaz dans le premier plénum, disposée dans le fond du récipient;
- d'au moins un moyen de filtration disposé dans le récipient formant un chemin d'écoulement pour les gaz du premier plénum vers le deuxième plénum, moyen de filtration qui comprend au moins un élément essentiellement perméable aux gaz et essentiellement imperméable aux solides entraînés, élément à travers lequel les gaz s'écoulent vers le deuxième plénum;
- d'un moyen pour fournir une impulsion de gaz de lavage à contre-courant dans le moyen de filtration pour éliminer les solides séparés d'avec les gaz s'écoulant à travers le moyen de filtration et accumulés là-dessus; et
- d'un ou plusieurs moyens de filtration, chacun étant entourés par un moyen de gaine, ledit moyen de gaine ayant un haut et un fond ouvert;
caractérisé en ce que
- la au moins une entrée introduisant les gaz impurs dans le premier plénum est disposée de façon adjacente au haut du récipient; et en ce que
- le moyen de gaine possède un haut ouvert ou des ouvertures dans son extrémité supérieure pour permettre aux gaz impurs de traverser le haut ouvert ou les ouvertures dans l'espace compris entre le moyen de gaine et le moyen de filtration, et est disposé pour diriger les solides éliminés du moyen de filtration loin de l'entrée des gaz impurs vers la sortie de solides de façon à résister au ré-entraînement des solides dans le gaz impur.

2. Appareil selon la revendication 1, dans lequel le moyen de gaine est disposé de sorte que les portions verticales de l'élément filtrant sont totalement entourées par le moyen de gaine.

3. Appareil selon la revendication 2, dans lequel le moyen de gaine est disposé pour être fixé à un autre moyen de gaine à sa surface externe.

4. Appareil selon la revendication 2, dans lequel le moyen de gaine est formé d'une pluralité de passages sensiblement parallèles enfermant le moyen de filtration, chaque passage ayant au moins une paroi commune avec un autre passage.

5. Appareil selon la revendication 4, dans lequel le passage est disposé pour être sous forme d'une structure en nid d'abeille.

6. Appareil selon la revendication 1, dans lequel le moyen de gaine est un élément disposé à proximité de la zone de l'élément filtrant utilisé pour la filtration, ayant une portion d'impact pour recevoir les solides balayés à partir de l'élément filtrant, et une portion de collecte de matière pour recueillir les solides et transporter les solides au fond du récipient.

7. Appareil selon la revendication 6, dans lequel la portion d'impact possède une largeur sensiblement égale ou supérieure à la largeur de la zone frontale effective de l'élément de filtre, et la portion de collecte de matière (887) s'étendant à partir des bords verticaux de la portion d'impact (886), ladite portion de collecte (887) étant courbée vers l'élément de filtre et ayant un endroit calme aux bords les plus en arrière de ladite portion de collecte de matière (887) pour empêcher les solides d'être ré-entraînés dans le gaz.

8. Appareil selon la revendication 1, dans lequel ledit moyen de gaine comprend une paroi prévue avec des ouvertures.

9. Appareil selon la revendication 1, dans lequel ledit moyen de gaine se compose de métal durable à température élevée ou d'une matière de céramique.

10. Appareil selon la revendication 1, comprenant au moins deux moyens de filtration et moyens de gaine entourants, dans lequel au moins un desdits moyens de gaine s'étend plus loin vers une section inférieure du récipient par rapport à l'autre moyen de gaine.

11. Appareil selon la revendication 1, dans lequel le moyen de gaine est un élément tubulaire ayant un diamètre interne supérieur à celui nécessaire pour circonscrire le moyen de filtration.

12. Procédé de fonctionnement d'un dispositif de filtration, le dispositif de filtration comprenant essentiellement:
- un récipient ayant un haut et un fond, au moins un premier plénum pour des gaz contenant des contaminants à éliminer des gaz et au moins un deuxième plénum;
- au moins une entrée pour introduire les gaz impurs dans le premier plénum;
- au moins une sortie pour les gaz filtrés dans le deuxième plénum;
- au moins une sortie pour les solides entraînés séparés des gaz dans le premier plénum et disposée dans le fond du récipient;
- au moins un moyen de filtration disposé dans le récipient et formant un chemin d'écoulement pour les gaz du premier plénum vers le deuxième plénum, moyen de filtration qui comprend au moins un élément essentiellement perméable aux gaz et essentiellement imperméable aux solides, élément à travers lequel les gaz s'écoulent vers le deuxième plénum;
- un moyen pour fournir une impulsion de gaz en sens inverse dans le moyen de filtration pour éliminer les solides séparés d'avec les gaz s'écoulant à travers le moyen de filtration et accumulés là-dessus, un ou plusieurs moyens de filtration chacun étant entourés par un moyen de gaine, ledit moyen de gaine ayant un haut et un fond ouvert, dans lequel le procédé comprend les étapes consistant:
- à introduire les gaz contenant des contaminants à éliminer des gaz via l'entrée dans un premier plénum dudit récipient;
- à disposer lesdits gaz pour qu'ils s'écoulent à travers ledit moyen de filtration, réalisant ainsi une filtration desdits gaz en séparant au moins une portion des solides entraînés d'avec les gaz et en accumulant celle-ci sur ledit moyen de filtration;
- à décharger les gaz filtrés via la sortie pour un traitement supplémentaire; et
- à fournir une impulsion de gaz de lavage à contre-courant dans le au moins un moyen de filtration pour éliminer les solides accumulés séparés des gaz s'écoulant à travers le moyen de filtration;
caractérisé en ce que des gaz sont introduits dans le premier plénum à travers l'entrée disposée adjacente au haut du récipient, le gaz impur passe dans l'espace compris entre le moyen de gaine et le moyen de filtration à travers un haut ouvert ou des ouvertures dans l'extrémité supérieure du moyen de gaine, et les solides éliminés sont dirigés par ledit moyen de gaine loin de l'entrée du gaz impur vers la sortie de solides de façon à résister au ré-entraînement dans le gaz impur des solides éliminés.
